# EUROPEAN PATENT APPLICATION

(11) **EP 4 733 571 A1**
(43) Date of publication of application: **29.04.2026**
(21) Application number: 24885823.5
(22) Date of filing: 31.10.2024
(51) Int. Cl.: F02M 26/28

(54) **STRADDLED VEHICLE**

(30) Priority: 31.10.2023 WO PCT/JP2023/039342; 31.10.2023 WO PCT/JP2023/039345
(71) Applicant: Yamaha Hatsudoki Kabushiki Kaisha, Iwata-shi, Shizuoka 438-8501 (JP)
(72) Inventor: MAKITA, Naoki, Iwata-shi, Shizuoka 438-8501 (JP); TAKAHASHI, Toshihiko, Iwata-shi, Shizuoka 438-8501 (JP); TORIGOSHI, Masaki, Iwata-shi, Shizuoka 438-8501 (JP); TAJIMA, Naoto, Iwata-shi, Shizuoka 438-8501 (JP); OKUBO, Akihiko, Iwata-shi, Shizuoka 438-8501 (JP); KAWABE, Keiji, Iwata-shi, Shizuoka 438-8501 (JP)
(74) Representative: Stöckeler, Ferdinand
(86) International application number: PCT/JP2024/038879
(87) International publication number: WO 2025/095056

(57) **Abstract**

A straddled vehicle (1) includes an EGR cooler (20) which is configured to cause condensed water generated due to cooling of exhaust gas to be discharged through an exhaust-side port (21) and flow toward an exhaust path (12). At least part of the EGR cooler is integrally formed with a cylinder portion (3). A first bolt (33a) is one of bolts (33) used for connecting two frame portions (31) provided at a right portion and a left portion of the straddled vehicle with the cylinder portion, and has a central axial line (Cb) extending along a vehicle left-right direction. On a first cross section (X1a to X1p) which passes through the central axial line (Cb) and is parallel to the central axial line (Cb), at least part of the EGR cooler is provided between two flat planes (SF 1 and SF2) which (i) respectively pass through the left end and the right end on the first cross section of a first screw fastening structure (35) formed of the first bolt and a first screw hole (34) into which the first bolt is inserted and (ii) are orthogonal to the central axial line (Cb).

## Description

### [Technical Field]

The present teaching relates to a straddled vehicle including an EGR cooler.

### [Background Art]

Conventionally, on an EGR (Exhaust Gas Recirculation) path by which part of exhaust gas generated in an engine is recirculated from an exhaust path to an intake path, an EGR cooler may be provided to cool the exhaust gas. For example, Patent Literature 1 recites a motorcycle in which an EGR cooler is integrally formed in a gearbox housing. In the EGR cooler of Patent Literature 1, an exhaust-side port into which exhaust gas flows is positioned below an intake-side port through which the exhaust gas flows out. Due to this, when the exhaust gas is cooled by the EGR cooler, condensed water generated in the EGR cooler is considered to be discharged from the exhaust-side port and flows toward the exhaust path.

### [Citation List]

### [Patent Literatures]

[Patent Literature 1] German Unexamined Patent Publication No. 102018120800

### [Summary]

### [Technical Problem]

Being different from automobiles, straddled vehicles have a feature that an engine functions as a member contributing to the rigidity of a vehicle body frame as the engine is connected to two frame portions provided at a left portion and a right portion of the vehicle. In addition to the above, because straddled vehicles are small and have less vacant space compared to automobiles, there are restrictions on the location for installing the EGR cooler. Furthermore, when condensed water generated in the EGR cooler is arranged to flow toward an exhaust passage as in Patent Literature 1, the location for installing the EGR cooler is further strictly restricted. It has therefore been required to provide the EGR cooler, which is positionally restricted in order to allow condensed water generated in the EGR cooler to flow toward the exhaust passage, and is provided in the straddled vehicle in a manner different from Patent Literature 1, while allowing the engine to function as a member contributing to the rigidity of the vehicle body frame.

Under these circumstances, an object of the present teaching is to provide a straddled vehicle in which an EGR cooler, which is positionally restricted in order to allow condensed water generated in the EGR cooler to flow toward an exhaust passage, is provided in the straddled vehicle in a manner different from Patent Literature 1, while an engine is allowed to function as a member contributing to the rigidity of a vehicle body frame.

### [Solution to Problem]

(1) A straddled vehicle of an embodiment of the present teaching is arranged as described below.
   The straddled vehicle includes an EGR cooler which is provided on an EGR path in which part of exhaust gas generated in an engine recirculates from an exhaust path to an intake path, which has an exhaust-side port through which the exhaust gas flows in and an intake-side port through which the exhaust gas flows out, which is arranged such that the lower end of the exhaust-side port is positioned below the intake-side port in a vehicle up-down direction, which is configured to cool the exhaust gas, and which is provided to allow condensed water generated due to cooling of the exhaust gas to be discharged from the exhaust-side port and flow toward the exhaust path, and
   in order to cause the engine to function as a member contributing to the rigidity of a vehicle body frame,

   (i) at least part of the EGR cooler is integrally formed with a cylinder portion which is included in the engine and is constituted by a cylinder head portion and a cylinder body portion, and
   (ii) on a first cross section which is parallel to and passing through a central axial line parallel to a vehicle left-right direction for a first bolt among bolts used for connecting two frame portions included in the vehicle body frame and provided at a left portion and a right portion of the straddled vehicle, respectively, with the cylinder portion without interposition of a vibration absorber, at least part of the EGR cooler being provided between two flat planes which respectively pass through the left end and the right end on the first cross section of a first screw fastening structure formed of the first bolt and a first screw hole into which the first bolt is inserted, and which are orthogonal to the central axial line of the first bolt.

According to this configuration, the EGR cooler is configured to cause condensed water generated due to cooling of exhaust gas to be discharged through the exhaust-side port and flow toward the exhaust path. Furthermore, in order to cause the engine to function as a member contributing to the rigidity of the vehicle body frame, the EGR cooler has the following two features. The first feature is that at least part of the EGR cooler is integrally formed with the cylinder portion which is included in the engine and is constituted by the cylinder head portion and the cylinder body portion. The second feature is that, on the first cross section which passes through the central axial line of the first bolt and is parallel to the central axial line extending along the vehicle left-right direction, at least part of the EGR cooler is provided between the two flat planes which (i) pass through the left end and the right end on the first cross section of the first screw fastening structure formed of the first bolt and the first screw hole, respectively, and (ii) are orthogonal to the central axial line of the first bolt. The first bolt is one of the bolts used for connecting the two frame portions at the right portion and the left portion of the straddled vehicle with the cylinder portion without the interposition of a vibration absorber. In this way, the EGR cooler is provided by utilizing (i) the space surrounding, about the central axial line of the first bolt, the first screw fastening structure used for connecting the frame portions with the cylinder portion and (ii) the cylinder portion. On this account, while the EGR cooler is provided by utilizing the cylinder portion, it is possible to suppress a part including the cylinder portion and the EGR cooler from increasing in length in the vehicle left-right direction. It is therefore possible to provide the EGR cooler without influencing on the function of the first screw fastening structure, and to reduce the positional restriction of the EGR cooler. In this way, the EGR cooler can be positioned to allow the condensed water generated in the EGR cooler to flow toward the exhaust passage while securing the rigidity of the vehicle body frame by the engine and reducing the positional restriction of the EGR cooler, without influencing on the function of the first screw fastening structure.

Due to this, it is possible to provide the EGR cooler, which is positionally restricted in order to allow condensed water generated in the EGR cooler to flow toward the exhaust passage, in the straddled vehicle in a manner different from Patent Literature 1, while allowing the engine to function as a member contributing to the rigidity of the vehicle body frame.

(2) In addition to the arrangement (1) above, the straddled vehicle of the embodiment of the present teaching may be arranged as described below.

In order to cause the engine to function as a member contributing to the rigidity of a vehicle body frame,
(i) at least part of the EGR cooler is integrally formed with at least part of the cylinder portion, which is made of aluminum or aluminum alloy, and
(ii) on the first cross section, at least part of the EGR cooler is provided between the two flat planes which pass through the left end and the right end on the first cross section of the first screw fastening structure and are orthogonal to the central axial line of the first bolt.

According to this configuration, the part of the EGR cooler integrally formed with the cylinder portion is made of aluminum or aluminum alloy. Because aluminum has high thermal conductivity, dissipation of heat of exhaust gas inside the EGR cooler is facilitated. By ensuring the cooling performance of the EGR cooler while suppressing its increase in size, the positional restriction of the EGR cooler can be further reduced. Furthermore, because aluminum excels in processability, it is easy to integrally form at least part of the EGR cooler and the cylinder portion, and hence the degree of freedom in designing the EGR cooler can be improved. Furthermore, because increase in length of the part including the cylinder portion and the EGR cooler in the vehicle left-right direction can be further suppressed in the engine, the positional restriction of the EGR cooler can be further reduced.

In this way, it is possible to position the EGR cooler to allow the condensed water generated in the EGR cooler to flow toward the exhaust passage while securing the rigidity of the vehicle body frame by the engine and further reducing the positional restriction of the EGR cooler, without influencing on the function of the first screw fastening structure.

(3) In addition to the arrangement (1) or (2) above, the straddled vehicle of the embodiment of the present teaching may be arranged as described below.

An upper part of the central axial line of at least one cylinder hole formed by the cylinder portion is positioned forward of a lower part of the central axial line in a vehicle front-rear direction, a front portion of the cylinder portion forms part of the exhaust path, and a rear portion of the cylinder portion forms part of the intake path, and
in order to cause the engine to function as a member contributing to the rigidity of a vehicle body frame,
(i) at least part of the EGR cooler is integrally formed with the cylinder portion,
(ii) in the vehicle front-rear direction, the exhaust-side port of the EGR cooler is positioned forward of the intake-side port, and
(iii) on the first cross section, at least part of the EGR cooler is provided between the two flat planes which pass through the left end and the right end on the first cross section of the first screw fastening structure and are orthogonal to the central axial line of the first bolt.

According to this configuration, the upper part of the central axial line of the at least one cylinder hole formed by the cylinder portion is positioned forward of the lower part. In other words, the cylinder portion is tilted forward. The front part of the cylinder portion constitutes part of the exhaust path, the rear part of the cylinder portion constitutes part of the intake path, and the exhaust-side port of the EGR cooler is positioned forward of the intake-side port of the EGR cooler. Dut to this, by utilizing the forward tilt of the cylinder portion, the EGR cooler can be provided to allow the condensed water generated in the EGR cooler to flow toward the exhaust passage, and hence the positional restriction of the EGR cooler is further reduced.

In this way, it is possible to position the EGR cooler to allow the condensed water generated in the EGR cooler to flow toward the exhaust passage while securing the rigidity of the vehicle body frame by the engine and further reducing the positional restriction of the EGR cooler, without influencing on the function of the first screw fastening structure.

(4) In addition to any one of the arrangements (1) to (3) above, the straddled vehicle of the embodiment of the present teaching may be arranged as described below.

In order to cause the engine to function as a member contributing to the rigidity of a vehicle body frame,
(i) at least part of the EGR cooler is integrally formed with the cylinder portion,
(ii) on the first cross section, at least part of the EGR cooler is provided between the two flat planes which pass through the left end and the right end on the first cross section of the first screw fastening structure and are orthogonal to the central axial line of the first bolt, and
(iii-1) on the first cross section, an EGR cooler-related surface which is a part of a left face of the engine and is formed of at least one of (a) a surface to the left of the EGR cooler or (b) a surface formed by the EGR cooler is provided rightward of a flat plane which passes through the left end of the first screw fastening structure on the first cross section and is orthogonal to the central axial line of the first bolt, or
(iii-2) on the first cross section, an EGR cooler-related surface which is a part of a right face of the engine and is formed of at least one of (a) a surface to the right of the EGR cooler or (b) a surface formed by the EGR cooler is provided leftward of a flat plane which passes through the right end of the first screw fastening structure on the first cross section and is orthogonal to the central axial line of the first bolt.

According to this configuration, when the EGR cooler-related surface is part of the left face of the engine and formed of at least one of the surface to the left of the EGR cooler or the surface formed by the EGR cooler, on the first cross section, the leftmost end of the EGR cooler-related surface of the engine is provided in the space that surrounds the first screw fastening structure around the central axial line of the first bolt. Furthermore, when the EGR cooler-related surface is part of the right face of the engine and formed of at least one of the surface to the right of the EGR cooler or the surface formed by the EGR cooler, on the first cross section, the rightmost end of the EGR cooler-related surface of the engine is provided in the space that surrounds the first screw fastening structure around the central axial line of the first bolt. Due to this, because increase in length of the part including the cylinder portion and the EGR cooler in the vehicle left-right direction can be further suppressed in the engine, the positional restriction of the EGR cooler can be further reduced.

According to the configuration above, furthermore, on the first cross section, in the space surrounding the first screw fastening structure about the central axial line of the first bolt, (i) the rightmost end or the leftmost end of the EGR cooler-related surface of the engine and (ii) at least part of the EGR cooler are provided. On this account, the EGR cooler is provided at a position close to the left face or the right face of the engine or forms part of the left face or the right face of the engine. Due to this, as the air flow generated by the running of the straddled vehicle impinges on the EGR cooler-related surface that is the outer surface of the part of the engine including the cylinder portion and the EGR cooler, part of the heat of the exhaust gas in the EGR cooler is further efficiently dissipated. On this account, by ensuring the cooling performance of the EGR cooler while suppressing its increase in size, the positional restriction of the EGR cooler can be further reduced.

In this way, it is possible to position the EGR cooler to allow the condensed water generated in the EGR cooler to flow toward the exhaust passage while securing the rigidity of the vehicle body frame by the engine and further reducing the positional restriction of the EGR cooler, without influencing on the function of the first screw fastening structure.

(5) In addition to any one of the arrangements (1) to (4) above, the straddled vehicle of the embodiment of the present teaching may be arranged as described below.

Two front fork units are provided at the left portion and the right portion of the straddled vehicle, respectively, to extend along the vehicle up-down direction, and support at least one front wheel to be rotatable,
when the first bolt is used to connect the frame portion provided at the left portion of the straddled vehicle with the cylinder portion,
the EGR cooler is provided such that, when the straddled vehicle is running, at least one of an air flow having passed through inside the two front fork units or an air flow having passed through outside the two front fork units impinges on the EGR cooler-related surface which is part of the left face of the engine and formed of at least one of (a) the surface to the left of the EGR cooler or (b) the surface formed by the EGR cooler, and
when the first bolt is used to connect the frame portion provided at the right portion of the straddled vehicle with the cylinder portion,
the EGR cooler is provided such that, when the straddled vehicle is running, at least one of an air flow having passed through inside the two front fork units or an air flow having passed through outside the two front fork units impinges on the EGR cooler-related surface which is part of the right face of the engine and formed of at least one of (a) the surface to the right of the EGR cooler or (b) the surface formed by the EGR cooler.

This configuration makes it possible to achieve the following technical effects. A relatively large space is provided inside the two front fork units because a space that allows the front wheel to move in the vehicle up-down direction relative to the vehicle body frame is required. Due to this, a large amount of air flow passes through the space inside the two front fork units, and the large amount of air flow is arranged to hit the EGR cooler-related surface that is the outer surface of the part of the engine including the cylinder portion and the EGR cooler. No vehicle-mounted components are typically provided outside the two front fork units, and hence there is a large space outside the units, which allows an air flow to pass through. Due to this, when the straddled vehicle is running, a large amount of air flow passes through the space outside the two front fork units, and the large amount of air flow is arranged to hit the EGR cooler-related surface that is the outer surface of the part of the engine including the cylinder portion and the EGR cooler.

As such, when the straddled vehicle is running, by utilizing an air flow flowing around the front fork unit, it is possible to arrange a larger amount of air flow to hit the EGR cooler-related surface that is the outer surface of the part of the engine including the cylinder portion and the EGR cooler. Due to this, part of the heat of the exhaust gas in the EGR cooler is further efficiently dissipated. On this account, by ensuring the cooling performance of the EGR cooler while suppressing its increase in size, the positional restriction of the EGR cooler can be further reduced.

In this way, it is possible to position the EGR cooler to allow the condensed water generated in the EGR cooler to flow toward the exhaust passage while securing the rigidity of the vehicle body frame by the engine and further reducing the positional restriction of the EGR cooler, without influencing on the function of the first screw fastening structure.

(6) In addition to the arrangement (5) above, the straddled vehicle of the embodiment of the present teaching may be arranged as described below.

A headlight unit composed of at least one headlight is provided, and
the EGR cooler is arranged such that, when the straddled vehicle is running, in a space which is above the rotation center of the at least one front wheel and below the lower end of the headlight unit in the vehicle up-down direction, at least one of the air flow having passed through the inside the two front fork units or the air flow having passed through the outside the two front fork units impinges on the EGR cooler-related surface of the engine, which is formed of at least one of (a) the surface to the left of or to the right of the EGR cooler or (b) the surface formed by the EGR cooler.

This configuration makes it possible to achieve the following technical effects. Because the front wheel is supported by the front fork unit at a rotation center portion, no space is formed between the front wheel and the front fork unit at around the rotation center of the front wheel. On the other hand, above the vicinity of the rotation center, a clearance (space) is provided between the front wheel and the front fork unit to allow the front wheel to rotate. This space functions as a path in which an air flow flows, and it is possible to cause the air flow having passed through the space to hit the EGR cooler-related surface that is the outer surface of the part of the engine including the cylinder portion and the EGR cooler. Furthermore, the lower end of the headlight unit including at least one headlight is positioned so that the space allowing the front wheel to move in the vehicle up-down direction relative to the vehicle body frame is provided directly below the headlight unit. On this account, a relatively large space is formed directly below the headlight unit, a large amount of air flow flows through this space, and it is possible to arrange the large amount of air flow to hit the EGR cooler-related surface that is the outer surface of the part of the engine including the cylinder portion and the EGR cooler.

As such, when the straddled vehicle is running, by utilizing an air flow flowing around the front fork unit in the space above the rotation center of the front wheel and below the lower end of the headlight unit, it is possible to arrange a larger amount of air flow to hit the EGR cooler-related surface that is the outer surface of the part of the engine including the cylinder portion and the EGR cooler. Due to this, part of the heat of the exhaust gas in the EGR cooler is further efficiently dissipated. On this account, by ensuring the cooling performance of the EGR cooler while suppressing its increase in size, the positional restriction of the EGR cooler can be further reduced.

In this way, it is possible to position the EGR cooler to allow the condensed water generated in the EGR cooler to flow toward the exhaust passage while securing the rigidity of the vehicle body frame by the engine and further reducing the positional restriction of the EGR cooler, without influencing on the function of the first screw fastening structure.

(7) In addition to the arrangement (6) above, the straddled vehicle of the embodiment of the present teaching may be arranged as described below.

The EGR cooler is provided above the rotation center of the at least one front wheel and below the lower end of the headlight in the vehicle up-down direction such that, when the straddled vehicle is running, in the space which is above the rotation center of the at least one front wheel and below the lower end of the headlight unit in the vehicle up-down direction, at least one of the air flow having passed through the inside the two front fork units or the air flow having passed through the outside the two front fork units impinges on the EGR cooler-related surface of the engine, which is formed of at least one of (a) the surface to the left of or to the right of the EGR cooler or (b) the surface formed by the EGR cooler.

According to this configuration, the EGR cooler and the EGR cooler-related surface are provided above the rotation center of the front wheel and below the lower end of the headlight unit in the vehicle up-down direction. On this account, when the straddled vehicle is running, by further reliably utilizing an air flow flowing around the front fork unit in the space above the rotation center of the front wheel and below the lower end of the headlight unit, it is possible to arrange a larger amount of air flow to hit the EGR cooler-related surface that is the outer surface of the part of the engine including the cylinder portion and the EGR cooler. Due to this, part of the heat of the exhaust gas in the EGR cooler is further efficiently dissipated. On this account, by ensuring the cooling performance of the EGR cooler while suppressing its increase in size, the positional restriction of the EGR cooler can be further reduced.

In this way, it is possible to position the EGR cooler to allow the condensed water generated in the EGR cooler to flow toward the exhaust passage while securing the rigidity of the vehicle body frame by the engine and further reducing the positional restriction of the EGR cooler, without influencing on the function of the first screw fastening structure.

(8) In addition to any one of the arrangements (1) to (7) above, the straddled vehicle of the embodiment of the present teaching may be arranged as described below.

When the first bolt is used to connect the frame portion provided at the left portion of the straddled vehicle with the cylinder portion,
a part of the left face of the engine, which is at least part of the EGR cooler-related surface formed of at least one of (a) the surface to the left of the EGR cooler or (b) the surface formed by the EGR cooler, is covered with a cover portion,
between the EGR cooler-related surface and the cover portion, a gap is provided to allow an air flow generated by the running of the straddled vehicle to pass through, and
when the first bolt is used to connect the frame portion provided at the right portion of the straddled vehicle with the cylinder portion,
a part of the right face of the engine, which is at least part of the EGR cooler-related surface formed of at least one of (a) the surface to the right of the EGR cooler or (b) the surface formed by the EGR cooler, is covered with the cover portion, and
between the EGR cooler-related surface and the cover portion, a gap is provided to allow an air flow generated by the running of the straddled vehicle to pass through.

This configuration makes it easy to secure a gap between the EGR cooler-related surface and the cover portion. On this account, when the straddled vehicle is running, it is possible to arrange a larger amount of air flow to hit the EGR cooler-related surface that is the outer surface of the part of the engine including the cylinder portion and the EGR cooler. Due to this, by further utilizing the air flow generated by the running of the straddled vehicle, part of the heat of the exhaust gas in the EGR cooler is further efficiently dissipated. On this account, by ensuring the cooling performance of the EGR cooler while suppressing its increase in size, the positional restriction of the EGR cooler can be further reduced.

In this way, it is possible to position the EGR cooler to allow the condensed water generated in the EGR cooler to flow toward the exhaust passage while securing the rigidity of the vehicle body frame by the engine and further reducing the positional restriction of the EGR cooler, without influencing on the function of the first screw fastening structure.

(9) In addition to any one of the arrangements (1) to (7) above, the straddled vehicle of the embodiment of the present teaching may be arranged as described below.

When the first bolt is used to connect the frame portion provided at the left portion of the straddled vehicle with the cylinder portion,
the part of the left face of the engine, which is at least part of the EGR cooler-related surface formed of at least one of (a) the surface to the left of the EGR cooler or (b) the surface formed by the EGR cooler, is exposed to the outside of the straddled vehicle without being covered with a cover portion, and
when the first bolt is used to connect the frame portion provided at the right portion of the straddled vehicle with the cylinder portion,
the part of the right face of the engine, which is at least part of the EGR cooler-related surface formed of at least one of (a) the surface to the right of the EGR cooler or (b) the surface formed by the EGR cooler, is exposed to the outside of the straddled vehicle without being covered with a cover portion.

According to this configuration, because the EGR cooler-related surface is exposed to the outside, when the straddled vehicle is running, it is possible to arrange a larger amount of air flow to hit the EGR cooler-related surface that is the outer surface of the part of the engine including the cylinder portion and the EGR cooler. Furthermore, as described above, the EGR cooler is provided at a position close to the left face or the right face of the engine or forms part of the left face or the right face of the engine. Due to this, by further utilizing the air flow generated by the running of the straddled vehicle, part of the heat of the exhaust gas in the EGR cooler is further efficiently dissipated. On this account, by ensuring the cooling performance of the EGR cooler while suppressing its increase in size, the positional restriction of the EGR cooler can be further reduced.

In this way, it is possible to position the EGR cooler to allow the condensed water generated in the EGR cooler to flow toward the exhaust passage while securing the rigidity of the vehicle body frame by the engine and further reducing the positional restriction of the EGR cooler, without influencing on the function of the first screw fastening structure.

(10) In addition to any one of the arrangements (1) to (9) above, the straddled vehicle of the embodiment of the present teaching may be arranged as described below.

In order to cause the engine to function as a member contributing to the rigidity of a vehicle body frame,
at least part of the EGR cooler is integrally formed with the cylinder portion, and
on the first cross section, at least part of the EGR cooler is provided between the two flat planes which pass through the left end and the right end of the first bolt on the first cross section and are orthogonal to the central axial line of the first bolt.

According to this configuration, the EGR cooler is provided by utilizing (i) the space surrounding the first bolt used for connecting the frame portions with the cylinder portion, around the central axial line of the first bolt and (ii) the cylinder portion. On this account, the EGR cooler is provided at a position close to the left face or the right face of the engine or forms part of the left face or the right face of the engine. Due to this, as the air flow generated by the running of the straddled vehicle impinges on the outer surface of the part of the engine including the cylinder portion and the EGR cooler, part of the heat of the exhaust gas in the EGR cooler is further efficiently dissipated. On this account, by ensuring the cooling performance of the EGR cooler while suppressing its increase in size, the positional restriction of the EGR cooler can be further reduced.

In this way, it is possible to position the EGR cooler to allow the condensed water generated in the EGR cooler to flow toward the exhaust passage while securing the rigidity of the vehicle body frame by the engine and further reducing the positional restriction of the EGR cooler, without influencing on the function of the first screw fastening structure.

In the present teaching, a path indicates a space in which an object such as gas flows. This definition is applicable to an EGR path, an intake path, and an exhaust path of the present teaching and embodiments.

In the present teaching and embodiments, a vehicle up-down direction is a direction perpendicular to a horizontal plane when the straddled vehicle stands erect on the horizontal plane.

In the present teaching and embodiments, a vehicle front-rear direction is a direction parallel to a running direction of the straddled vehicle when the straddled vehicle runs straight.

In the present teaching and embodiments, a vehicle left-right direction is a direction orthogonal to the vehicle up-down direction and the vehicle front-rear direction, and is a left-right direction for the rider riding on the straddled vehicle.

In the present teaching and embodiments, a straddled vehicle refers to a vehicle in which a rider rides in a state of straddling a saddle. The straddled Vehicle includes a motorcycle, a motor tricycle, a four-wheeled buggy (ATV: All Terrain Vehicle), a snowmobile, a personal watercraft, and the like. The motorcycle as the straddled vehicle includes a scooter, an engine-equipped bicycle, a moped, etc. The motor tricycle includes one front wheel or two front wheels.

The straddled vehicle of the present teaching and embodiments may include at least one front wheel. The straddled vehicle of the present teaching and embodiments may be a leaning vehicle in which a vehicle body frame leans in a vehicle rightward direction relative to a vehicle up-down direction when turning right and leans in a vehicle leftward direction relative to the vehicle up-down direction when turning left.

In the present teaching and embodiments, a driving source of the straddled vehicle may only be an engine, or may be both an engine and an electric motor. The electric motor as the driving source does not include a starter motor which is used exclusively for starting an engine.

In the present teaching and embodiments, a left portion of the straddled vehicle is a portion leftward of the center of the straddled vehicle in the vehicle left-right direction, and a right portion of the straddled vehicle is a portion rightward of the center of the straddled vehicle in the vehicle left-right direction.

In the present teaching and embodiments, the straddled vehicle includes an engine. In the present teaching and embodiments, the engine may be a four-stroke engine. The engine may be a multi-cylinder engine having plural combustion chambers. The engine may be an inline multi-cylinder engine having combustion chambers aligned in the vehicle left-right direction. The engine may be a V engine that has a V shape when viewed in the vehicle left-right direction. The engine may be a single-cylinder engine having one combustion chamber.

In the present teaching and embodiments, the number of at least one cylinder hole formed by a cylinder portion may be one or more. A combustion chamber is formed by a cylinder hole, a piston provided in the cylinder hole, and a cylinder head portion. When a cylinder portion forms plural cylinder holes, the cylinder holes formed by the cylinder portion may be lined up on a straight line parallel to the vehicle left-right direction.

In the present teaching and embodiments, a central axial line of a cylinder hole is not a line segment existing only in a region where the cylinder hole exists but a linear line with infinite length. An upper part of the central axial line of the cylinder hole may be positioned forward of a lower part of the central axial line of the cylinder hole in the vehicle front-rear direction. When the engine is a V engine having a front cylinder portion forming at least one cylinder hole and a rear cylinder portion provided behind the front cylinder portion, an upper part of the central axial line of at least one cylinder hole formed by the front cylinder portion is positioned forward of the lower part in the vehicle front-rear direction. The rear cylinder portion may not be included in the cylinder portion of the present teaching.

In the present teaching and embodiments, a cylinder portion formed of a cylinder head portion and a cylinder body portion indicates a cylinder portion formed solely of a cylinder head portion and a cylinder body portion. The cylinder head portion is separable from the cylinder body portion. The cylinder head portion may be formed of plural separable components, or may be formed of a single inseparable component. For example, the cylinder head portion may be formed of separable components including a head cover. The cylinder body portion is connected to a crankcase member of the engine. The cylinder body portion forms at least one cylinder hole. The crankcase member accommodates a crankshaft. The crankcase member has at least one of a part protruding leftward relative to a left face of the cylinder portion or a part protruding rightward relative to a right face of the cylinder portion. The crankcase member is equivalent to the gearbox housing of Patent Literature 1. The cylinder body portion may be separable from the crankcase member. Alternatively, at least part of the cylinder body portion and at least part of the crankcase member may form a single component. In this case, the border between the cylinder body portion and the crankcase member is positioned on a plane that passes through an end of at least one cylinder hole formed by the cylinder body portion and is orthogonal to at least one cylinder axial line.

In the present teaching and embodiments, an expression "an engine functions as a member contributing to the rigidity of a vehicle body frame" indicates that the engine improves the rigidity of a part of the vehicle body frame including two frame portions, as compared to a case where the two frame portions are not connected to the cylinder portion. In other words, at least the cylinder portion of the engine functions as a member contributing to the rigidity of the vehicle body frame.

In the present teaching and embodiments, two frame portions provided at a left portion and a right portion of the straddled vehicle may be provided along the vehicle front-rear direction. In the present teaching and embodiments, the expression "provided along the vehicle front-rear direction" may not indicate that the frame portions are provided to be parallel to the vehicle front-rear direction.

In the present teaching and embodiments, an expression "two frame portions are connected to a cylinder portion without the interposition of a vibration absorber" indicates that two frame portions are connected to a cylinder portion without the interposition of a member arranged to absorb vibration of the engine. In typical automobiles, the engine is supported by the vehicle body frame through the intermediary of a vibration absorber made of rubber, etc., which is termed an engine mount.

In the present teaching and embodiments, bolts used for connecting two frame portions with a cylinder portion are either bolts directly connecting two frame portions with a cylinder portion or bolts used for connecting two frame portions with a cylinder portion through brackets. The number of bolts used for connecting each frame portion with the cylinder portion is one or more. When the two frame portions are directly connected with the cylinder portion, the central axial lines of the bolts may be parallel to each other or substantially parallel to each other. When the two frame portions are connected with the cylinder portion through the brackets, the central axial lines of the bolts may be parallel to each other or substantially parallel to each other. When the two frame portions are connected with the cylinder portion through the brackets, the central axial lines of two or more bolts among the bolts may be parallel to each other or substantially parallel to each other, and may be orthogonal to or substantially orthogonal to the central axial lines of the remaining bolts.

In the present teaching and embodiments, the central axial line along the vehicle left-right direction of a first bolt may be parallel to or substantially parallel to the vehicle left-right direction. In the present teaching and embodiments, the central axial line of the first bolt is not a line segment existing only in a region where the first bolt exists but a linear line with infinite length. When the two frame portions are connected with the cylinder portion through the brackets, the first bolt may be a bolt connecting one of the two frame portions with the bracket. In the present teaching and embodiments, the first bolt may be provided at the left portion or the right portion of the straddled vehicle.

In the present teaching and embodiments, a first screw hole into which the first bolt is inserted may be formed in a bracket for connecting one of the two frame portions with the cylinder portion, in the cylinder portion, or in a nut. When the two frame portions are directly connected with the cylinder portion, the first screw hole may be formed in the cylinder portion. When the two frame portions are connected with the cylinder portion through the brackets, the first screw hole may be formed in the cylinder portion, in the bracket, or in the nut. The first screw hole has a thread with which the first bolt is screwed. The first screw hole may or may not be a through hole. The first screw hole indicates the entire hole into which the first bolt is inserted. In other words, the first screw hole may include a part of the hole, inside which the first bolt does not exist.

In the present teaching and embodiments, a first screw fastening structure formed of the first bolt and the first screw hole indicates a first screw fastening structure formed solely of the first bolt and the first screw hole. In the present teaching and embodiments, the first screw fastening structure may be provided at the left portion or the right portion of the straddled vehicle.

In the present teaching and embodiments, the left end and the right end on a first cross section of the first screw fastening structure are the leftmost end and the rightmost end of the first screw fastening structure on the first cross section, respectively. The left end and the right end on the first cross section of the first screw fastening structure are not limited to the leftmost end and the rightmost end of the first screw fastening structure in a three-dimensional space. The left end and the right end on the first cross section of the first screw fastening structure may be a combination of (i) the left end or the right end of the first bolt on the first cross section and (ii) the left end or the right end of the first screw hole on the first cross section. When the first screw hole is formed in the nut, the left end and the right end on the first cross section of the first screw fastening structure may be the left end and the right end of the first bolt on the first cross section.

In the present teaching and embodiments, an intake path is directly connected to at least one combustion chamber of the engine. In the intake path, air supplied to at least one combustion chamber of the engine flows. The intake path is partially formed inside the cylinder portion. The intake path is partially formed outside the engine and constituted by an intake pipe, etc. A rear part of the cylinder portion may constitute part of the intake path. The rear part of the cylinder portion is a part of the cylinder portion, which is rearward of a plane that passes through the central axial line of the cylinder hole and is parallel to the vehicle left-right direction. The intake path has at least one downstream end in the flow direction of the air. The number of the at least one downstream end of the intake path may be identical with the number of combustion chambers or larger than the number of combustion chambers.

In the present teaching and embodiments, the exhaust path is directly connected to at least one combustion chamber of the engine. In the exhaust path, exhaust gas exhausted from the at least one combustion chamber of the engine flows. The exhaust path is partially formed inside the cylinder portion. The exhaust path is partially formed outside the engine and constituted by an exhaust pipe, etc. A front part of the cylinder portion may constitute part of the exhaust path. The front part of the cylinder portion is a part of the cylinder portion, which passes through the central axial line of the cylinder hole and is forward of a plane that is parallel to the vehicle left-right direction. The exhaust path has at least one upstream end in the flow direction of the exhaust gas. The number of the at least one upstream end of the exhaust path may be identical with the number of combustion chambers or larger than the number of combustion chambers.

In the present teaching and embodiments, an EGR path is directly connected to the intake path and the exhaust path. The EGR path may be connected to the exhaust path and the intake path at the outside of the engine. The EGR path may be connected to the exhaust path and the intake path at the inside of the engine (cylinder portion). The EGR path may be connected to the exhaust path at the inside of the engine (cylinder portion) and connected to the intake path at the outside of the engine. The EGR path may be connected to the exhaust path at the outside of the engine and connected to the intake path at the inside of the engine (cylinder portion).

In the present teaching and embodiments, the number of junctions between the EGR path and the exhaust path may be one or plural. When the engine has plural combustion chambers, the EGR path may be connected to the exhaust path such that part of the exhaust gas exhausted from the plural combustion chambers flows into the EGR path. When the engine has plural combustion chambers, the EGR path may be connected to the exhaust path such that only part of the exhaust gas exhausted from at least one of the plural combustion chambers flows into the EGR path.

In the present teaching and embodiments, the number of junctions between the EGR path and the intake path may be one or plural.

In the present teaching and embodiments, the EGR path may be provided with an EGR valve configured to adjust the flow rate of the exhaust gas flowing in the EGR path. The EGR valve may be provided between the intake path and the EGR cooler on the EGR path.

In the present teaching and embodiments, the EGR cooler is configured to cool the exhaust gas flowing into the EGR cooler through the exhaust-side port. The EGR cooler may be configured to cool the exhaust gas by utilizing coolant (e.g., water) for cooling the cylinder portion. In this case, the EGR cooler includes at least a wall body provided between the EGR path and a coolant path in which coolant flows. The engine may include a coolant path dedicated for the EGR cooler, or part of a coolant path for cooling the cylinder portion may function as a coolant path for the EGR cooler. The EGR cooler may be configured to cool the exhaust gas by utilizing an air flow generated by the running of the straddled vehicle, irrespective of the cooling method of cooling the engine. In this case, the EGR cooler includes a fin by which the heat exchange efficiency is improved by increasing the contact area with an air flow.

In the present teaching and embodiments, an expression "the EGR cooler is provided to allow condensed water generated due to cooling of exhaust gas to be discharged from the exhaust-side port and flow toward the exhaust path" indicates that the EGR cooler and the EGR path are arranged such that condensed water in the EGR cooler, which is generated due to cooling of exhaust gas by the EGR cooler, flows toward the exhaust-side port of the EGR cooler and is discharged from the exhaust-side port, and the condensed water discharged from the exhaust-side port flows in the EGR path toward the exhaust path. The condensed water generated due to cooling of the exhaust gas by the EGR cooler is discharged from the exhaust-side port and flows toward the exhaust path.

In the present teaching and embodiments, an expression "condensed water generated due to cooling of exhaust gas is discharged from the exhaust-side port and flows toward the exhaust path" encompasses a case where condensed water in the EGR cooler, which is generated due to cooling of exhaust gas by the EGR cooler, is discharged from the exhaust-side port and flows into the exhaust path. The condensed water discharged from the exhaust-side port may evaporate before reaching the exhaust path.

In the present teaching and embodiments, the EGR path inside the EGR cooler may be provided rightward or leftward of the center of the straddled vehicle in the vehicle left-right direction. In the description, the expression "the EGR path inside the EGR cooler" indicates a part of the EGR path, which is positioned inside the EGR cooler. In the present teaching and embodiments, the EGR cooler may be provided rightward or leftward of the center of the straddled vehicle in the vehicle left-right direction. When viewed in a direction parallel to the central axial line of at least one cylinder hole formed by the cylinder portion, the EGR path inside the EGR cooler may be provided either rightward of the central axial line of the rightmost cylinder hole among the at least one cylinder hole formed by the cylinder portion or leftward of the central axial line of the leftmost cylinder hole among the at least one cylinder hole formed by the cylinder portion. When viewed in a direction parallel to the central axial line of at least one cylinder hole formed by the cylinder portion, the EGR cooler may be provided either rightward of the rightmost cylinder hole among the at least one cylinder hole formed by the cylinder portion or leftward of the leftmost cylinder hole among the at least one cylinder hole formed by the cylinder portion.

In the present teaching and embodiments, the flow direction of exhaust gas at least in a part of the EGR path inside the EGR cooler may be along a direction orthogonal to the vehicle left-right direction. The expression "a direction along a direction orthogonal to the vehicle left-right direction" encompasses not only a direction parallel to a direction orthogonal to the vehicle left-right direction but also a direction inclined with a range of ±45 degrees in the vehicle left-right direction relative to the direction orthogonal to the vehicle left-right direction. The EGR path may be arranged to branch into plural paths at around the exhaust-side port inside the EGR cooler and the branched paths are merged at around the intake-side port inside the EGR cooler. The EGR path may be arranged neither to branch nor to merge inside the EGR cooler.

In the present teaching and embodiments, an expression "at least part of the EGR cooler is integrally formed with the cylinder portion" indicates that at least part of the EGR cooler is integrally formed with a part of the cylinder portion, which has a function of the cylinder portion different from a cooling function as the EGR cooler. The part having the function of the cylinder portion may be, for example, a part forming a cylinder hole. In the present teaching and embodiments, when a part of the EGR cooler is independent from the cylinder portion, the part of the EGR cooler which is independent from the cylinder portion may be provided at a location inside the cylinder portion, which is separated from the outer surface of the cylinder portion, or may be attached to the outer surface of the cylinder portion. When the entire EGR cooler is integrally formed with the cylinder portion, the EGR cooler may be provided at a location inside the cylinder portion, which is separated from the outer surface of the cylinder portion, or may form the outer surface of the cylinder portion. In the present teaching and embodiments, at least part of a wall body forming the EGR path inside the EGR cooler may be integrally formed with the cylinder portion. In the present teaching and embodiments, the wall body forming the EGR path inside the EGR cooler may be made of aluminum or aluminum alloy.

When the first bolt is used to connect the frame portion provided at the left portion of the straddled vehicle with the cylinder portion, a part of the left face of the engine, which is formed by at least one of a surface to the left of the EGR cooler or a surface formed by the EGR cooler, is termed an EGR cooler-related surface. When the first bolt is used to connect the frame portion provided at the right portion of the straddled vehicle with the cylinder portion, a part of the right face of the engine, which is formed by at least one of a surface to the right of the EGR cooler or a surface formed by the EGR cooler, is termed an EGR cooler-related surface. The EGR cooler-related surface appears as a line in the above-described first cross section. In the present teaching and embodiments, on the first cross section, the EGR cooler-related surface may be provided between two flat planes that respectively pass through the left end and the right end on the first cross section of the first screw fastening structure and are orthogonal to the central axial line of the first bolt. On the first cross section, the EGR cooler-related surface may be provided between two flat planes that pass through the left end and the right end of the first bolt on the first cross section, respectively, and are orthogonal to the central axial line of the first bolt. On the first cross section, the EGR cooler-related surface may be provided either leftward of a straight line passing through the left end of the first screw fastening structure and being orthogonal to the central axial line of the first bolt or rightward of a straight line passing through the right end on the first cross section of the first screw fastening structure and being orthogonal to the central axial line of the first bolt. Both when the entire EGR cooler is integrally formed with the cylinder portion and when part of the EGR cooler is integrally formed with the cylinder portion, the EGR cooler-related surface may be a surface to the left of or to the right of the EGR cooler, may be a surface formed by the EGR cooler, or may be formed by both (i) a surface to the left of or to the right of the EGR cooler and (ii) a surface formed by the EGR cooler.

In the present teaching and embodiments, on the first cross section, the EGR path inside the EGR cooler may be provided between two flat planes that respectively pass through the left end and the right end on the first cross section of the first screw fastening structure, and are orthogonal to the central axial line of the first bolt. On the first cross section, the EGR path inside the EGR cooler may be provided between two flat planes that pass through the left end and the right end of the first bolt on the first cross section, respectively, and are orthogonal to the central axial line of the first bolt.

When the first bolt is used to connect the frame portion provided at the left portion of the straddled vehicle with the cylinder portion, a part of the left face of the engine, which is positioned to the left of the EGR path inside the EGR cooler, is termed an EGR cooler path-related surface. When the first bolt is used to connect the frame portion provided at the right portion of the straddled vehicle with the cylinder portion, a part of the right face of the engine, which is positioned to the right of the EGR path inside the EGR cooler, is termed an EGR cooler path-related surface.

In the present teaching and embodiments, on the first cross section, the EGR cooler path-related surface may be provided between two flat planes that respectively pass through the left end and the right end on the first cross section of the first screw fastening structure and are orthogonal to the central axial line of the first bolt. On the first cross section, the EGR cooler path-related surface may be provided between two flat planes that pass through the left end and the right end of the first bolt on the first cross section, respectively, and are orthogonal to the central axial line of the first bolt. On the first cross section, the EGR cooler path-related surface may be provided either leftward of a flat plane passing through the left end on the first cross section of the first screw fastening structure and being orthogonal to the central axial line of the first bolt or rightward of a flat plane passing through the right end on the first cross section of the first screw fastening structure and being orthogonal to the central axial line of the first bolt.

The EGR cooler path-related surface is part of the EGR cooler-related surface. Due to this, when an air flow generated by the running of the straddled vehicle hits the EGR cooler-related surface, part of this air flow impinges on the EGR cooler path-related surface. In the present teaching and embodiments, the EGR path inside the EGR cooler may be provided above the rotation center of at least one front wheel and below the lower end of a headlight in the vehicle up-down direction so that, when the straddled vehicle is running, in a space that is above the rotation center of the at least one front wheel and below the lower end of a headlight unit in the vehicle up-down direction, at least one of an air flow having passed through the inside of two front fork units or an air flow having passed through the outside of the two front fork units impinges on the EGR cooler path-related surface.

In the present teaching and embodiments, the EGR cooler path-related surface is at least partially covered with a cover portion. In this case, between the EGR cooler path-related surface and the cover portion, a gap may be provided to allow an air flow generated by the running of the straddled vehicle to pass through. In the present teaching and embodiments, the EGR cooler path-related surface may be exposed to the outside of the straddled vehicle without being covered with a cover portion.

In the present teaching and embodiments, the front fork unit is formed of one or more front forks. Each front fork is a rod-shaped member extending along the vehicle up-down direction, and a single front fork is not forked on its own. The front fork unit is not forked, either. When the straddled vehicle has one front wheel, the front fork unit may be formed of a single front fork. When the straddled vehicle has two front wheels, the front fork unit may be formed of plural front forks. To be more specific, a pair of right front forks supporting a right front wheel may form a single front fork unit, and a pair of left front forks supporting a left front wheel may form another single front fork unit.

In the present teaching and embodiments, the straddled vehicle may include a headlight unit composed of at least one headlight. The headlight unit may be constituted by a single headlight provided at the center in the vehicle left-right direction of the straddled vehicle, or may be constituted by two headlights provided at the left portion and the right portion of the straddled vehicle, respectively. The position of the center in the vehicle left-right direction of the headlight unit may be identical with the center in the vehicle left-right direction of the straddled vehicle. The headlight unit may be a part of the straddled vehicle, which is visible from the front. The headlight may be provided in a hole formed in the front cover. In this case, when the straddled vehicle is viewed from the front, a space that allows the front wheel to move in the vehicle up-down direction relative to the vehicle body frame is secured below the lower end of the front cover provided directly below the headlight unit. In this description, the space below the lower end of the front cover provided directly below the headlight unit may be referred to as a space directly below the headlight unit.

In the present teaching and embodiments, the cover portion forms part of the appearance of the straddled vehicle. The cover portion may be an independent member, may be part of an independent member, or may be constituted by plural independent members. The cover portion may be a tank shroud which appears to be integrated with the tank. The cover portion may be at least part of a cover that is either a front cowling or a side cowling. The cover portion may be a protector provided to protect at least the EGR cooler.

In the present teaching and embodiments, the engine may be air-cooled or liquid-cooled by using coolant that is not lubricating oil. The air-cooled or liquid-cooled engine may be combined with cooling by using lubricating oil.

In the present teaching and embodiments, the engine may be provided with a fuel supplier configured to supply fuel to a combustion chamber of the engine. The fuel supplier may be provided to directly supply fuel to a combustion chamber of the engine. The fuel supplier may be provided to supply fuel to an intake path.

In the present teaching and embodiments, the straddled vehicle may or may not include a forced induction device which is configured to pressurize air supplied to a combustion chamber of the engine. The forced induction device may be a turbocharger, a mechanical supercharger, or a motor-driven supercharger. The turbocharger may be an electrically assisted turbocharger configured to pressurize air by the pressure of exhaust gas and an electric motor, or a turbocharger configured to pressurize air solely by the pressure of exhaust gas.

In the present teaching and embodiments, the straddled vehicle may include a catalyst which is configured to purify exhaust gas and is provided in the exhaust path. The catalyst may be, for example, provided downstream of a part to which the EGR path is connected in the flow direction of the exhaust gas, in the exhaust path.

In this description, an expression "a member A is provided leftward of a member B when viewed in the left-right direction" indicates the following state. The entire member A is leftward of a plane passing through the leftmost end of the member B and orthogonal to the left-right direction. The rightmost end of the member A may or may not be on the plane passing through the leftmost end of the member B and orthogonal to the left-right direction. In this connection, the members A and B may or may not be lined up along a straight line parallel to the left-right direction. The above-described definition is suitably applied for an expression "a member A is rightward of a member B in the left-right direction", with appropriate replacement of the terms. Further, the above-described definition is suitably applied for an expression "a member A is above or below a member B in the up-down direction", with appropriate replacement of the terms. Further, the above-described definition is suitably applied for an expression "a member A is forward of or rearward of a member B in the front-rear direction", with appropriate replacement of the terms.

In the description, unless otherwise specified, an expression "a member A is to the left of a member B in the left-right direction" encompasses both a case where the member A is to the left of only a part of the member B in the left-right direction and a case where the member A is to the left of the entire member B in the left-right direction. An expression "a member A is to the left of a member B in the left-right direction" indicates the following state. The entire member A overlaps at least part of the member B when viewed in the left-right direction, and the right end of the entire member A and the left end of the at least part of the member B oppose each other in the left-right direction. The above-described definition is suitably applied for an expression "a member A is to the right of a member B in the left-right direction", with appropriate replacement of the terms. Further, the above-described definition is suitably applied for an expression "a member A is directly above or below a member B in the up-down direction", with appropriate replacement of the terms. Further, the above-described definition is suitably applied for an expression "a member A is in front of or behind a member B in the front-rear direction", with appropriate replacement of the terms.

In the present teaching and embodiments, terms "including", "comprising", "having", and derivatives thereof are used to encompass not only listed items and equivalents thereof but also additional items.

In the present teaching and embodiments, the terms "mounted", "connected", "coupled", and "supported" are used in a broad sense. Specifically, not only direct attachment, connection, coupling, and support but also indirect attachment, connection, coupling, and support are included. Further, connected and coupled are not limited to physical or mechanical connections and couplings. They also include direct or indirect electrical connections and couplings.

Unless otherwise defined, all terms (technical and scientific terms) used in this description and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

In this description, the term "may" is non-exclusive. "May be" means "may be but not limited to". In the present specification, "may" implicitly encompasses "do not".

Before the embodiments of the present teaching are detailed, it is to be noted that the present teaching is not limited to the configurations and layout of elements described below and/or shown in drawings. The present teaching is also applicable to embodiments other than the embodiments described later. The present teaching may be implemented as various modifications of the below-described embodiment.

### [Advantageous Effects]

The present teaching is configured to provide a straddled vehicle in which an EGR cooler, which is positionally restricted in order to allow condensed water generated in the EGR cooler to flow toward an exhaust passage, is provided in the straddled vehicle in a manner different from Patent Literature 1, while an engine is allowed to function as a member contributing to the rigidity of a vehicle body frame.

### [Brief Description of Drawings]

FIG. 1 is a drawing for describing a straddled vehicle of a First Embodiment of the present teaching.
FIG. 2 is a drawing for describing a straddled vehicle of a Second Embodiment of the present teaching.
FIG. 3 is a drawing for describing a straddled vehicle of a Third Embodiment of the present teaching.
FIG. 4 is a drawing for describing a straddled vehicle of a Fourth Embodiment of the present teaching.
FIG. 5 is a drawing for describing a straddled vehicle of a Fifth Embodiment of the present teaching.
FIG. 6 is a drawing for describing a straddled vehicle of a Sixth Embodiment of the present teaching.

### [Description of Embodiments]

In each figure, arrows F, Re, L, R, U, and D indicate a vehicle forward direction, a vehicle rearward direction, a vehicle leftward direction, a vehicle rightward direction, a vehicle upward direction, and a vehicle downward direction, respectively.

### [First Embodiment]

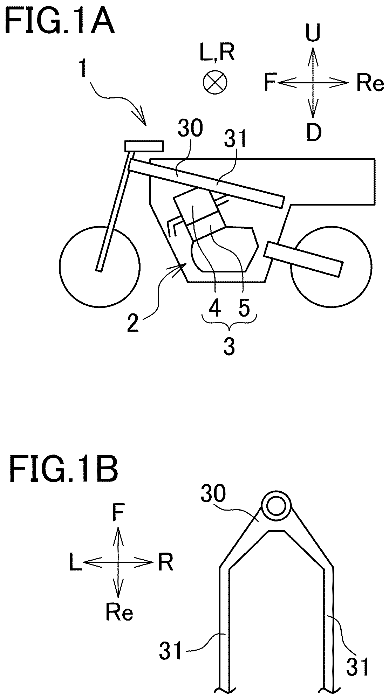

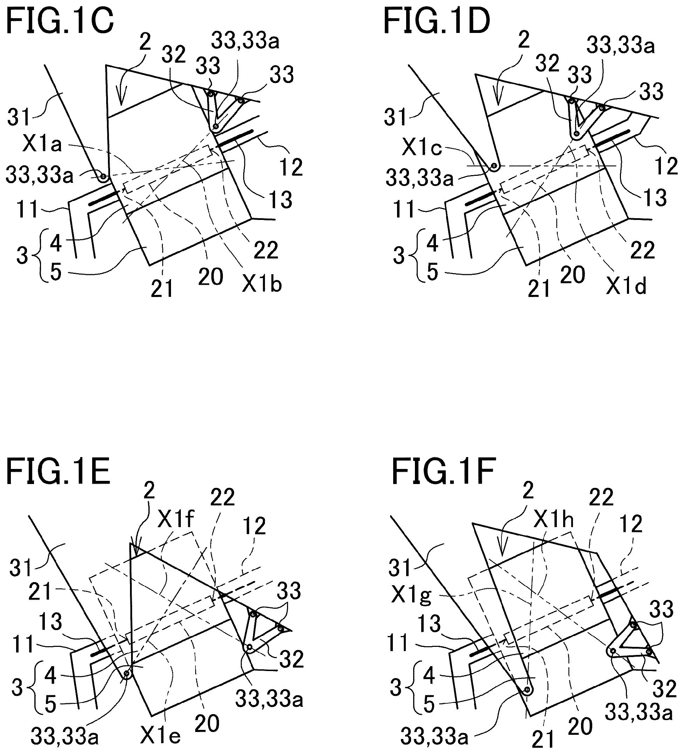

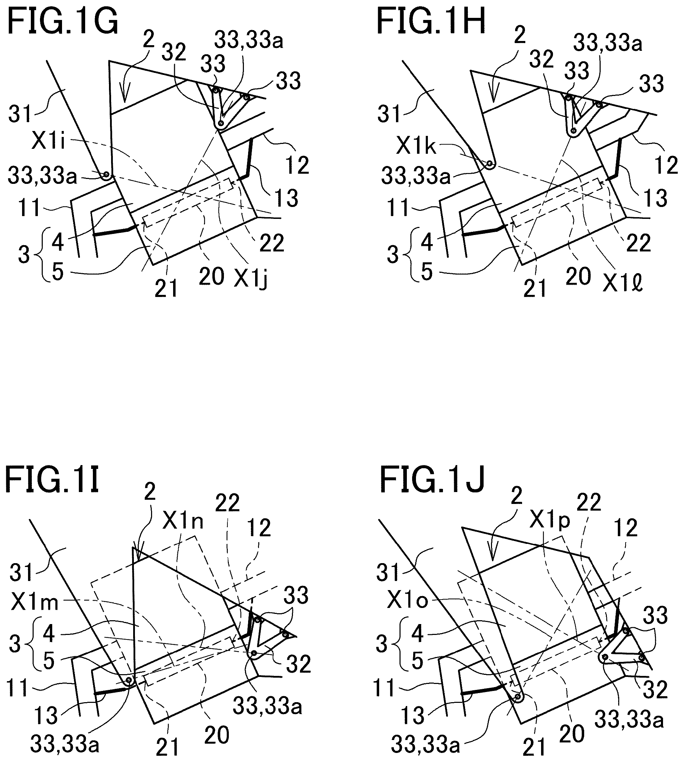

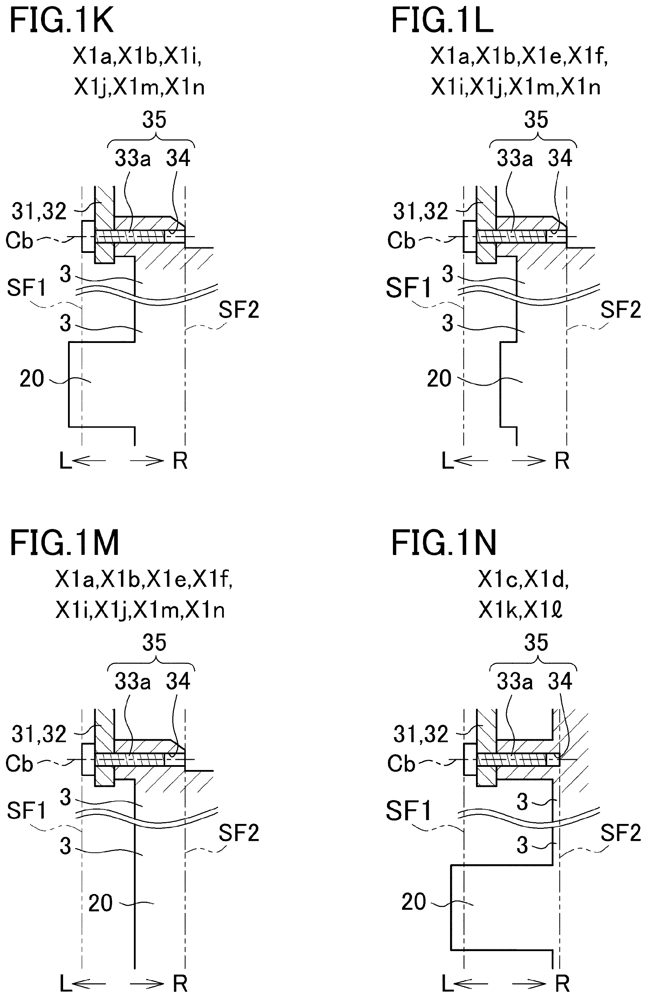

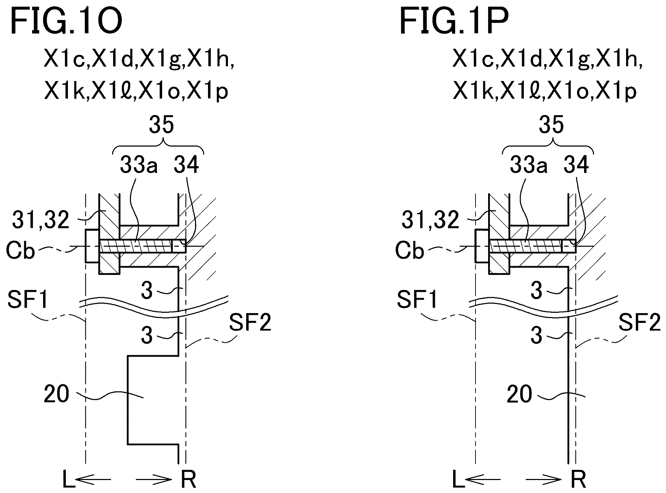

The following will describe a straddled vehicle 1 of the First Embodiment of the present teaching with reference to FIG. 1(a) to FIG. 1(p). Later-described straddled vehicles 1 of the Second to Sixth Embodiments include all features of the First Embodiment. While FIG. 1(c) to FIG. 1(p) show specific examples of the First Embodiment, the First Embodiment is not limited to these specific examples.

As shown in FIG. 1(a), the straddled vehicle 1 includes a vehicle body frame 30 and an engine 2. The engine 2 includes a cylinder portion 3 formed of a cylinder head portion 4 and a cylinder body portion 5. As shown in FIG. 1(b), the vehicle body frame 30 includes two frame portions 31 that are provided at a left portion and a right portion of the straddled vehicle 1, respectively.

The straddled vehicle 1 includes an EGR cooler 20. FIG. 1(c) to FIG. 1(j) show eight examples of the layout of the EGR cooler 20 in the straddled vehicle 1 of the First Embodiment. FIG. 1(c) to FIG. 1(j) are partially enlarged views of FIG. 1(a). The EGR cooler 20 is provided on an EGR path 13 which recirculates part of exhaust gas generated in the engine 2 from an exhaust path 11 to an intake path 12. The EGR cooler 20 has an exhaust-side port 21 through which exhaust gas flows in and an intake-side port 22 through which exhaust gas flows out. The EGR cooler 51 is arranged such that, in the vehicle up-down direction, the lower end of the exhaust-side port 21 is positioned below the intake-side port 22. The EGR cooler 20 is configured to cool the exhaust gas flowing in from the exhaust-side port 21 and cause condensed water generated due to cooling of the exhaust gas to be discharged through the exhaust-side port 21 and flow toward the exhaust path 11.

To cause the engine 2 to function as a part contributing to the rigidity of the vehicle body frame 30, the straddled vehicle 1 of the First Embodiment has the following features. At least part of the EGR cooler 20 is integrally formed with the cylinder portion 3. The two frame portions 31 and the cylinder portion 3 are connected by using bolts 33, without the interposition of a vibration absorber. On a first cross section X1 (X1a to X1p) which passes through a central axial line Cb of a first bolt 33a among first bolts 33 and is parallel to the central axial line Cb extending along the vehicle left-right direction, at least part of the EGR cooler 20 is provided between two flat planes SF1 and SF2 which (i) respectively pass through the left end and the right end on the first cross section X1 of a first screw fastening structure 35 formed of the first bolt 33a and a first screw hole 34 into which the first bolt 33a is inserted and (ii) are orthogonal to the central axial line Cb of the first bolt 33a. The flat plane SF1 passes through the left end on the first cross section X1 of the first screw fastening structure 35, whereas the flat plane SF2 passes through the right end on the first cross section X1 of the first screw fastening structure 35.

FIG. 1(c) to FIG. 1(f) show examples when at least part of the EGR cooler 20 is integrally formed with the cylinder head portion 4, and FIG. 1(g) to FIG. 1(i) show examples when at least part of the EGR cooler 20 is integrally formed with the cylinder body portion 5. FIG. 1(c) to FIG. 1(j) show examples when the first bolt 33a is used for connecting the frame portion 31 at the left portion of the straddled vehicle 1 with the cylinder portion 3. The first bolt 33a may be a bolt 33 used for connecting the frame portion 31 at the right portion of the straddled vehicle 1 with the cylinder portion 3.

FIG. 1(c) to FIG. 1(j) show examples in which the straddled vehicle 1 has two bolts 33 each of which is equivalent to the first bolt 33a. First cross sections X1 corresponding to the respective two first bolts 33a are denoted by reference numbers X1a and X1b in FIG. 1(c). First cross sections X1 corresponding to 14 first bolts 33a in total, respectively, are denoted by reference numbers X1c to X1p in FIG. 1(d) to FIG. 1(j). The first cross section X1 is a collective term of the first cross sections X1a to X1p. In FIG. 1(c) to FIG. 1(j), the first bolt 33a is either a bolt 33 directly connecting the frame portion 31 with the cylinder portion 3 or a bolt 33 connecting the frame portion 31 with the cylinder portion 3 through the bracket 32.

FIG. 1(k) to FIG. 1(p) show examples of the first cross sections X1a to X1p shown in FIG. 1(c) to FIG. 1(j). In FIG. 1(k) to FIG. 1(p), the EGR cooler 20 is hatched with dots, and the EGR path 13 inside the EGR cooler 20 is not shown.

At least part of the EGR cooler 20 may be integrally formed with at least part of the cylinder portion 3, which is made of aluminum or aluminum alloy.

### [Second Embodiment]

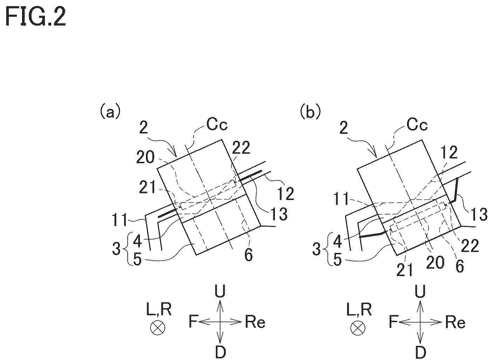

The following will describe a straddled vehicle 1 of the Second Embodiment of the present teaching with reference to FIG. 2(a) and FIG. 2(b). While FIG. 2(a) and FIG. 2(b) show specific examples of the Second Embodiment, the Second Embodiment is not limited to these specific examples. FIG. 2(a) shows an example when at least part of the EGR cooler 20 is integrally formed with the cylinder head portion 4, and FIG. 2(b) shows an example when at least part of the EGR cooler 20 is integrally formed with the cylinder body portion 5.

In the Second Embodiment, the engine 2 is positioned so that an upper part of the central axial line Cc of at least one cylinder hole 6 formed by the cylinder portion 3 is forward of a lower part in the vehicle front-rear direction. The front part of the cylinder portion 3 constitutes part of the exhaust path 11, and the rear part of the cylinder portion 3 constitutes part of the intake path 12. In the vehicle front-rear direction, an exhaust-side port 21 of the EGR cooler 20 is positioned forward of an intake-side port 22.

### [Third Embodiment]

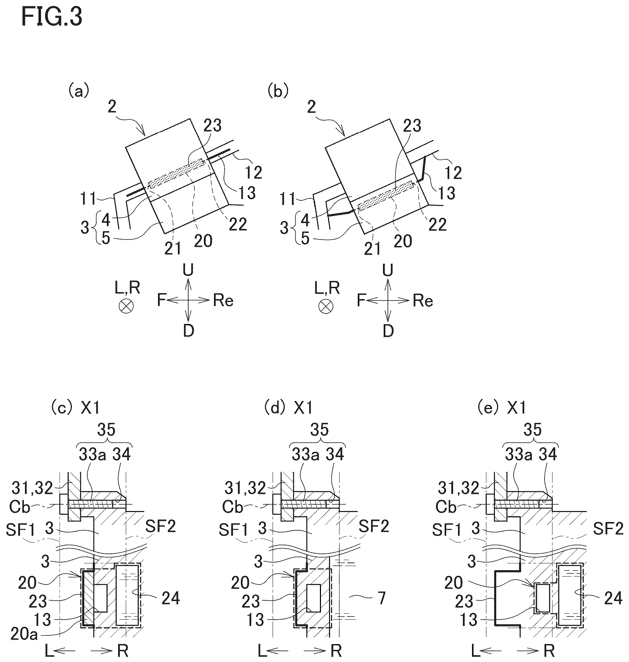

The following will describe a straddled vehicle 1 of the Third Embodiment of the present teaching with reference to FIG. 3(a) to FIG. 3(e). The straddled vehicle 1 of the Third Embodiment may have the same features as those of the Second Embodiment. While FIG. 3(a) to FIG. 3(e) show specific examples of the Third Embodiment, the Third Embodiment is not limited to these specific examples. FIG. 3(a) shows an example when at least part of the EGR cooler 20 is integrally formed with the cylinder head portion 4, and FIG. 3(b) shows an example when at least part of the EGR cooler 20 is integrally formed with the cylinder body portion 5. FIG. 3(c) shows an example of a first cross section X1 in FIG. 3(a) and FIG. 3(b). Likewise, FIG. 3(d) and FIG. 3(e) show examples of the first cross section X1 shown in FIG. 3(a) and FIG. 3(b).

The EGR cooler-related surface 23 is defined as described below. When the first bolt 33a is used to connect the frame portion 31 provided at the left portion of the straddled vehicle 1 with the cylinder portion 3, the EGR cooler-related surface 23 is a surface constituted by a part of the left face of the engine 2, which is formed by at least one of a surface to the left of the EGR cooler 20 or a surface formed by the EGR cooler 20. When the first bolt 33a is used to connect the frame portion 31 provided at the right portion of the straddled vehicle 1 with the cylinder portion 3, the EGR cooler-related surface 23 is a surface constituted by a part of the right face of the engine 2, which is formed by at least one of a surface to the right of the EGR cooler 20 or a surface formed by the EGR cooler 20. This definition of the EGR cooler-related surface 23 will also be used in later-described Fourth and Fifth Embodiments. FIG. 3(a) to FIG. 3(e) show examples in a case where the EGR cooler-related surface 23 is part of the left face of the engine 2. In FIG. 3(a) and FIG. 3(b), the EGR cooler-related surface 23 is hatched by dots. In FIG. 3(c) to FIG. 3(e), the EGR cooler-related surface 23 is indicated by a thick line.

In the Third Embodiment, the EGR cooler-related surface 23 defined as described above has the following features. When the EGR cooler-related surface 23 is part of the left face of the engine 2, on the first cross section X1, the EGR cooler-related surface 23 is provided rightward of a flat plane SF1 which passes through the left end on the first cross section X1 of the first screw fastening structure 35 and is orthogonal to the central axial line Cb of the first bolt 33a. When the EGR cooler-related surface 23 is part of the right face of the engine 2, on the first cross section X1, the EGR cooler-related surface 23 is provided leftward of a flat plane SF2 which passes through the right end on the first cross section X1 of the first screw fastening structure 35 and is orthogonal to the central axial line Cb of the first bolt 33a.

In FIG. 3(c) to FIG. 3(e), the EGR cooler 20 is configured to cool exhaust gas by utilizing coolant for cooling the cylinder portion 3. In FIG. 3(c) and FIG. 3(e), the EGR cooler 20 includes a coolant path 24 dedicated to the EGR cooler. In FIG. 3(d), the EGR cooler 20 is provided to be adjacent to a coolant path 7 for cooling the cylinder portion 3 and is configured to cool exhaust gas by utilizing coolant flowing in this coolant path 7. In FIG. 3(c), a part 20a of the EGR cooler 20 is independent from the cylinder portion 3, and the remaining part of the EGR cooler 20 is integrally formed with the cylinder portion 3. In FIG. 3(d) and FIG. 3(e), the entire EGR cooler 20 is integrally formed with the cylinder portion 3.

### [Fourth Embodiment]

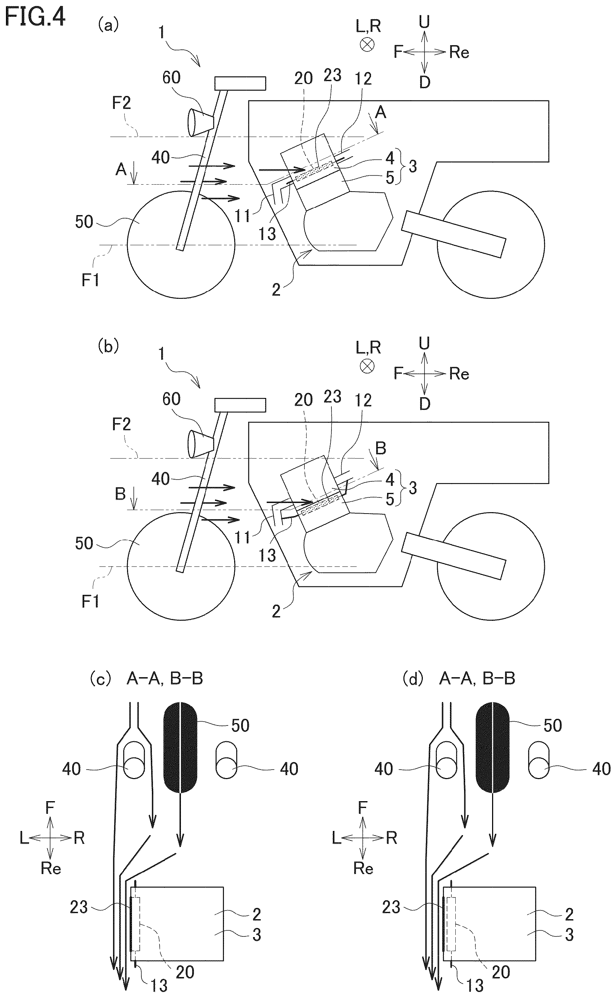

The following will describe a straddled vehicle 1 of the Fourth Embodiment of the present teaching with reference to FIG. 4(a) to FIG. 4(d). The straddled vehicle 1 of the Fourth Embodiment may have the same features as those of at least one of the Second Embodiment and the Third Embodiment. While FIG. 4(a) to FIG. 4(d) show specific examples of the Fourth Embodiment, the Fourth Embodiment is not limited to these specific examples. FIG. 4(a) shows an example when at least part of the EGR cooler 20 is integrally formed with the cylinder head portion 4, and FIG. 4(b) shows an example when at least part of the EGR cooler 20 is integrally formed with the cylinder body portion 5. FIG. 4(c) and FIG. 4(b) are a sectional view taken along a line A-A of FIG. 4(a) and a sectional view taken along a line B-B of FIG. 4(b), and show two examples of the layout of the EGR cooler 20. An EGR cooler-related surface 23 is defined in the same manner as the EGR cooler-related surface 23 of the Third Embodiment. FIG. 4(a) to FIG. 4(d) show examples in a case where the EGR cooler-related surface 23 is part of the left face of the engine 2.

The straddled vehicle 1 of the Fourth Embodiment includes two front fork units 40 which rotatably support at least one front wheel 50. FIG. 4(a) to FIG. 4(d) show examples when the number of front wheels 50 is one. The two front fork units 40 are provided at a left portion and a right portion of the straddled vehicle 1 and extend along the vehicle up-down direction.

In the Fourth Embodiment, the EGR cooler 20 is provided such that, when the straddled vehicle 1 is running, at least one of an air flow having passed through the inside of the two front fork units 40 or an air flow having passed through the outside of the two front fork units 40 impinges on the EGR cooler-related surface 23. In FIG. 4(a) to FIG. 4(d), air flows are indicated by thick arrows.

The straddled vehicle 1 of the Fourth Embodiment may include a headlight unit 60 composed of at least one headlight. A flat plane which passes through the rotation center of at least one front wheel 50 and is orthogonal to the vehicle up-down direction is defined as a flat plane F1. A flat plane which passes through the lower end of the headlight unit 60 and is orthogonal to the vehicle up-down direction is defined as a flat plane F2. In the Fourth Embodiment, the EGR cooler 20 may be provided such that, when the straddled vehicle 1 is running, in a space above the flat plane F1 and below the flat plane F2 in the vehicle up-down direction, at least one of an air flow having passed through the inside of the two front fork units 40 or an air flow having passed through the outside of the two front fork units 40 impinges on the EGR cooler-related surface 23. In the Fourth Embodiment, the EGR cooler 20 may be provided above the flat plane F1 and below the flat plane F2 in the vehicle up-down direction.

### [Fifth Embodiment]

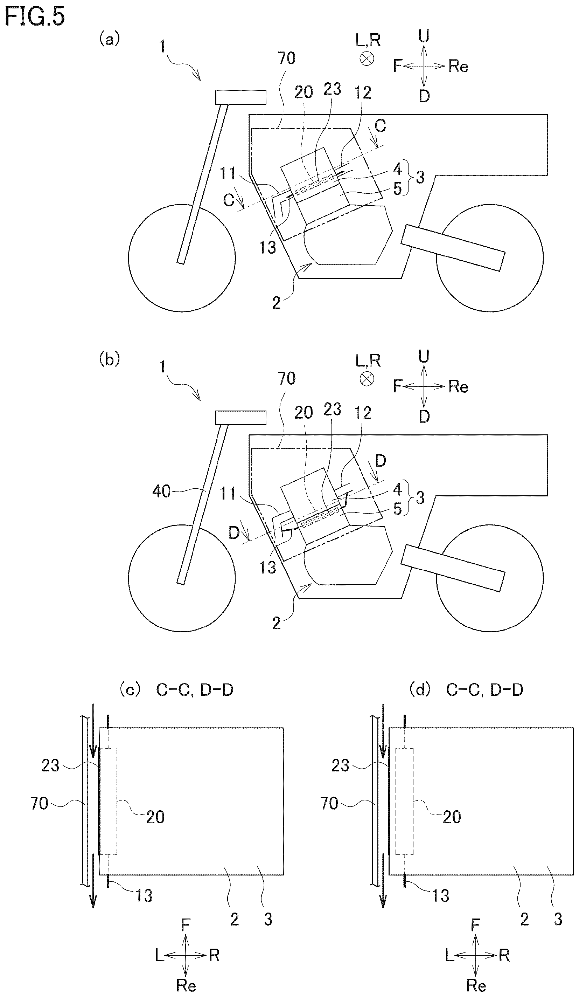

The following will describe a straddled vehicle 1 of the Fifth Embodiment of the present teaching with reference to FIG. 5(a) to FIG. 5(d). The straddled vehicle 1 of the Fifth Embodiment may have the same features as those of at least one of the Second Embodiment to the Fourth Embodiment. While FIG. 5(a) to FIG. 5(d) show specific examples of the Fifth Embodiment, the Fifth Embodiment is not limited to these specific examples. FIG. 5(a) shows an example when at least part of the EGR cooler 20 is integrally formed with the cylinder head portion 4, and FIG. 5(b) shows an example when at least part of the EGR cooler 20 is integrally formed with the cylinder body portion 5. FIG. 5(c) and FIG. 5(d) serve as both a sectional view taken along a line C-C of FIG. 5(a) and a sectional view taken along a line D-D of FIG. 5(b), and show two examples of the layout of the EGR cooler 20. An EGR cooler-related surface 23 is defined in the same manner as the EGR cooler-related surface 23 of the Third Embodiment. FIG. 5(a) to FIG. 5(d) show examples in a case where the EGR cooler-related surface 23 is part of the left face of the engine 2.

In the Fifth Embodiment, the EGR cooler-related surface 23 is at least partially covered with a cover portion 70. Furthermore, between the EGR cooler-related surface 23 and the cover portion 70, a gap is provided to allow an air flow generated by the running of the straddled vehicle 1 to pass through. In FIG. 5(a) to FIG. 5(d), air flows are indicated by thick arrows.

### [Sixth Embodiment]

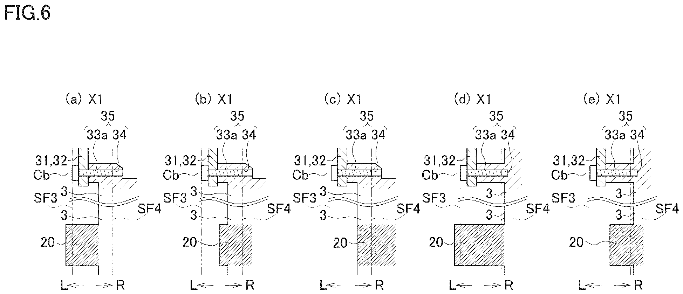

The following will describe a straddled vehicle 1 of the Sixth Embodiment of the present teaching with reference to FIG. 6(a) to FIG. 6(e). The straddled vehicle 1 of the Sixth Embodiment may have the same features as those of at least one of the Second Embodiment to the Fifth Embodiment. FIG. 6(a) to FIG. 6(e) show examples of a first cross section X1 of the Sixth embodiment. FIG. 6(a) to FIG. 6(e) show examples when a first bolt 33a is used for connecting a frame portion 31 at a left portion of the straddled vehicle 1 with a cylinder portion 3. The display states of the EGR cooler 20 shown in FIG. 6(a) to FIG. 6(e) are similar to the display states of the EGR cooler 20 shown in FIG. 1(k) to FIG. 1(p). The EGR cooler 20 of the Sixth Embodiment is not limited to the examples shown in FIG. 6(a) to FIG. 6(e).

In the Sixth Embodiment, on the first cross section X1, at least part of the EGR cooler 20 is provided between two flat planes SF3 and SF4 that pass through the left end and the right end of the first bolt 33a on the first cross section X1, respectively, and are orthogonal to the central axial line Cb of the first bolt 33a.

In the First to Fourth Embodiments and Sixth Embodiment, on the contrary to the Fifth Embodiment, the EGR cooler-related surface 23 may be exposed to the outside of the straddled vehicle 1 without being covered with the cover portion 70.

### [Reference Signs List]

1: straddled vehicle, 2: engine, 3: cylinder portion, 4: cylinder head portion, 5: cylinder body portion, 6: cylinder hole, 11: exhaust path, 12: intake path, 13: EGR path, 21: exhaust-side port, 22: intake-side port, 23: EGR cooler-related surface, 30: vehicle body frame, 31: frame portion, 33: bolt, 33a: first bolt, 34: first screw hole, 35: first screw fastening structure, 40: front fork unit, 50: front wheel, 60: headlight unit, 70: cover portion, Cb: central axial line of first bolt, Cc: central axial line of cylinder hole, SF1, SF2, SF3, SF4: flat plane, X1, X1a to X1p: first cross section

## Claims

1. A straddled vehicle comprising an EGR cooler which is provided on an EGR path in which part of exhaust gas generated in an engine recirculates from an exhaust path to an intake path, which has an exhaust-side port through which the exhaust gas flows in and an intake-side port through which the exhaust gas flows out, which is arranged such that the lower end of the exhaust-side port is positioned below the intake-side port in a vehicle up-down direction, which is configured to cool the exhaust gas, and which is provided to allow condensed water generated due to cooling of the exhaust gas to be discharged from the exhaust-side port and flow toward the exhaust path, and
in order to cause the engine to function as a member contributing to the rigidity of a vehicle body frame,
(i) at least part of the EGR cooler being integrally formed with a cylinder portion which is included in the engine and is constituted by a cylinder head portion and a cylinder body portion, and
(ii) on a first cross section which is parallel to and passing through a central axial line parallel to a vehicle left-right direction for a first bolt among bolts used for connecting two frame portions included in the vehicle body frame and provided at a left portion and a right portion of the straddled vehicle, respectively, with the cylinder portion without interposition of a vibration absorber, at least part of the EGR cooler being provided between two flat planes which respectively pass through the left end and the right end on the first cross section of a first screw fastening structure formed of the first bolt and a first screw hole into which the first bolt is inserted, and which are orthogonal to the central axial line of the first bolt.

2. The straddled vehicle according to claim 1, wherein,
in order to cause the engine to function as a member contributing to the rigidity of a vehicle body frame,
at least part of the EGR cooler is integrally formed with at least part of the cylinder portion, which is made of aluminum or aluminum alloy, and
on the first cross section, at least part of the EGR cooler is provided between the two flat planes which pass through the left end and the right end on the first cross section of the first screw fastening structure and are orthogonal to the central axial line of the first bolt.

3. The straddled vehicle according to claim 1 or 2, wherein,
an upper part of the central axial line of at least one cylinder hole formed by the cylinder portion is positioned forward of a lower part of the central axial line in a vehicle front-rear direction, a front portion of the cylinder portion forms part of the exhaust path, and a rear portion of the cylinder portion forms part of the intake path, and
in order to cause the engine to function as a member contributing to the rigidity of a vehicle body frame,
(i) at least part of the EGR cooler is integrally formed with the cylinder portion,
(ii) in the vehicle front-rear direction, the exhaust-side port of the EGR cooler is positioned forward of the intake-side port, and
(iii) on the first cross section, at least part of the EGR cooler is provided between the two flat planes which pass through the left end and the right end on the first cross section of the first screw fastening structure and are orthogonal to the central axial line of the first bolt.

4. The straddled vehicle according to any one of claims 1 to 3, wherein,
in order to cause the engine to function as a member contributing to the rigidity of a vehicle body frame,
(i) at least part of the EGR cooler is integrally formed with the cylinder portion,
(ii) on the first cross section, at least part of the EGR cooler is provided between the two flat planes which pass through the left end and the right end on the first cross section of the first screw fastening structure and are orthogonal to the central axial line of the first bolt, and
(iii-1) on the first cross section, an EGR cooler-related surface which is a part of a left face of the engine and is formed of at least one of (a) a surface to the left of the EGR cooler or (b) a surface formed by the EGR cooler is provided rightward of a flat plane which passes through the left end on the first cross section of the first screw fastening structure and is orthogonal to the central axial line of the first bolt, or
(iii-2) on the first cross section, an EGR cooler-related surface which is a part of a right face of the engine and is formed of at least one of (a) a surface to the right of the EGR cooler or (b) a surface formed by the EGR cooler is provided leftward of a flat plane which passes through the right end on the first cross section of the first screw fastening structure and is orthogonal to the central axial line of the first bolt.

5. The straddled vehicle according to any one of claims 1 to 4, further comprising
two front fork units which are provided at the left portion and the right portion of the straddled vehicle, respectively, extend along the vehicle up-down direction, and support at least one front wheel to be rotatable, when the first bolt is used to connect the frame portion provided at the left portion of the straddled vehicle with the cylinder portion,
the EGR cooler being provided such that, when the straddled vehicle is running, at least one of an air flow having passed through inside the two front fork units or an air flow having passed through outside the two front fork units impinges on the EGR cooler-related surface which is part of the left face of the engine and formed of at least one of (a) the surface to the left of the EGR cooler or (b) the surface formed by the EGR cooler, and
when the first bolt is used to connect the frame portion provided at the right portion of the straddled vehicle with the cylinder portion,
the EGR cooler being provided such that, when the straddled vehicle is running, at least one of an air flow having passed through inside the two front fork units or an air flow having passed through outside the two front fork units impinges on the EGR cooler-related surface which is part of the right face of the engine and formed of at least one of (a) the surface to the right of the EGR cooler or (b) the surface formed by the EGR cooler.

6. The straddled vehicle according to claim 5, further comprising
a headlight unit composed of at least one headlight,
the EGR cooler being arranged such that, when the straddled vehicle is running, in a space which is above the rotation center of the at least one front wheel and below the lower end of the headlight unit in the vehicle up-down direction, at least one of the air flow having passed through the inside the two front fork units or the air flow having passed through the outside the two front fork units impinges on the EGR cooler-related surface of the engine, which is formed of at least one of (a) the surface to the left of or to the right of the EGR cooler or (b) the surface formed by the EGR cooler.

7. The straddled vehicle according to claim 6, wherein,
the EGR cooler being provided above the rotation center of the at least one front wheel and below the lower end of the headlight in the vehicle up-down direction such that, when the straddled vehicle is running, in the space which is above the rotation center of the at least one front wheel and below the lower end of the headlight unit in the vehicle up-down direction, at least one of the air flow having passed through the inside the two front fork units or the air flow having passed through the outside the two front fork units impinges on the EGR cooler-related surface of the engine, which is formed of at least one of (a) the surface to the left of or to the right of the EGR cooler or (b) the surface formed by the EGR cooler.

8. The straddled vehicle according to any one of claims 1 to 7, wherein,
when the first bolt is used to connect the frame portion provided at the left portion of the straddled vehicle with the cylinder portion,
at least part of the EGR cooler-related surface, which is the part of the left face of the engine and is formed of at least one of (a) the surface to the left of the EGR cooler or (b) the surface formed by the EGR cooler, is covered with a cover portion,
when the first bolt is used to connect the frame portion provided at the right portion of the straddled vehicle with the cylinder portion,
at least part of the EGR cooler-related surface, which is the part of the right face of the engine and is formed of at least one of (a) the surface to the right of the EGR cooler or (b) the surface formed by the EGR cooler, is covered with the cover portion, and
between the EGR cooler-related surface and the cover portion, a gap is provided to allow an air flow generated by the running of the straddled vehicle to pass through.

9. The straddled vehicle according to any one of claims 1 to 7, wherein,
when the first bolt is used to connect the frame portion provided at the left portion of the straddled vehicle with the cylinder portion,
at least part of the EGR cooler-related surface, which is the part of the left face of the engine and is formed of at least one of (a) the surface to the left of the EGR cooler or (b) the surface formed by the EGR cooler, is exposed to the outside of the straddled vehicle without being covered with a cover portion, and
when the first bolt is used to connect the frame portion provided at the right portion of the straddled vehicle with the cylinder portion,
at least part of the EGR cooler-related surface, which is the part of the right face of the engine and is formed of at least one of (a) the surface to the right of the EGR cooler or (b) the surface formed by the EGR cooler, is exposed to the outside of the straddled vehicle without being covered with a cover portion.

10. The straddled vehicle according to any one of claims 1 to 9, wherein,
in order to cause the engine to function as a member contributing to the rigidity of a vehicle body frame,
(i) at least part of the EGR cooler is integrally formed with the cylinder portion, and
(ii) on the first cross section, at least part of the EGR cooler is provided between the two flat planes which pass through the left end and the right end of the first bolt on the first cross section and are orthogonal to the central axial line of the first bolt.
